# FASCICULE DE BREVET EUROPEEN

(11) **EP 0 625 422 B1**
(45) Date de publication et mention de la délivrance du brevet: **04.11.1998**
(21) Numéro de dépôt: 94401031.3
(22) Date de dépôt: 10.05.1994
(51) Int. Cl.: B32B 17/10, C03B 40/033

(54) **Procédé pour la fabrication d'un vitrage feuilleté bombe, en particulier d'un vitrage automobile**
Verfahren zur Herstellung eines gebogenen laminierten Verbundglasscheibe, insbesondere einer Fahrzeugverglasung
Method for making a curved laminated glass pane, particularly a car pane

(30) Priorité: 18.05.1993 DE 4316575
(43) Date de publication de la demande: 23.11.1994
(73) Titulaire: SAINT-GOBAIN VITRAGE, 92400 Courbevoie (FR)
(72) Inventeur: Gillner, Manfred, D-5100 Aachen (DE)
(74) Mandataire: Muller, René

(56) Documents cités:
- EP-A- 0 535 474
- US-A- 4 684 389

## Description

La présente invention concerne un procédé pour la fabrication d'un vitrage en verre feuilleté bombé, en particulier d'un vitrage automobile, formé de manière connue d'au moins deux feuilles de verre individuelles et d'au moins une feuille intermédiaire thermoplastique reliant ces feuilles de verre l'une à l'autre, dans lequel, de manière connue, une couche décorative en une encre à cuire, telle qu'un émail, est appliquée par impression sur une des feuilles de verre individuelles, sur la surface destinée ultérieurement à être en contact avec une feuille intermédiaire et dans la zone marginale, la couche décorative appliquée, après un processus de séchage préalable, est cuite à une température supérieure, les feuilles de verre individuelles sont superposées l'une à l'autre avec la couche décorative cuite vers l'intérieure, les feuilles de verre ainsi agencées sont amenées d'un bloc par bombage à la forme souhaitée et les feuilles de verre individuelles bombées sont unies l'une à l'autre à chaud et sous pression après insertion de la ou des feuilles intermédiaires thermoplastiques.
L'application d'une couche décorative en forme d'encadrement faite d'une encre à cuire, telle qu'un émail, opaque aux rayons lumineux et aux rayons U.V., dans la zone marginale des vitrages, est nécessaire lorsque les vitrages sont fixés par collage dans le cadre de fenêtre de la carrosserie d'un véhicule. Dans ce cas, le cordon d'adhésif est protégé par la couche décorative contre les rayons U.V. qui auraient pour conséquence de fragiliser l'adhésif. De plus, le cordon d'adhésif n'est, dès lors, plus visible à travers le vitrage. Dans le cas de vitrages en verre feuilleté, la couche décorative est également, en règle générale, appliquée sur la surface extérieure du vitrage tournée vers l'habitacle. Cependant, dans des cas déterminés, par exemple dans le cas de l'installation de conducteurs électriques dans la couche intermédiaire d'un vitrage en verre feuilleté, il est extrêmement intéressant d'appliquer la couche décorative sur le côté de la feuille de verre individuelle extérieure, tourné vers la feuille intermédiaire thermoplastique pour que les conducteurs électriques et/ou les bandes collectrices auxquelles ils sont rattachés restent invisibles de l'extérieur. C'est dans ce cas, par exemple, que le procédé conforme à l'invention intervient.

Lorsque des vitrages en verre feuilleté bombés formés de deux feuilles de verre et d'une feuille intermédiaire thermoplastique doivent être pourvus intérieurement, c'est-à-dire sur une surface adjacente à la feuille intermédiaire thermoplastique, d'une couche décorative telle que précédemment mentionnée, il n'est généralement pas possible, lors de la réalisation desdits vitrages, de procéder à la cuisson de l'encre à cuire constituant la couche décorative et déposée sur l'une des feuilles de verre, au cours de l'opération de bombage pendant laquelle les deux feuilles de verre sont bombées ensemble en tant que paire. Les encres à cuire habituelles contiennent en effet des constituants organiques qui, aux températures de cuisson, forment des produits de réaction gazeux qui ne peuvent pas s'échapper de l'interstice entre les deux feuilles de verre. De plus, il y a un risque accru que, lors de la fusion de l'encre à cuire, les deux feuilles de verre adhèrent l'une à l'autre.

Il est certes connu par le document DE-A1-41 32 652 de sécher la couche appliquée par impression simplement à une température à laquelle le liquide véhiculaire contenu dans l'encre d'imprimerie, ladite huile sérigraphique, est vaporisé, et de procéder à l'opération de cuisson lors de l'opération de bombage des deux feuilles de verre superposées par paire, sans collage desdites feuilles de verre. Ce mode de travail implique cependant l'utilisation d'encres à cuire spéciales ne provoquant pas, lors du bombage, l'adhésion des feuilles de verre, la spécificité de ces encres entraînant cependant d'autres inconvénients.

Le bombage par paire avec cuisson simultanée de l'encre à cuire et utilisation d'encres à cuire traditionnelles du genre émail est également décrit comme procédé possible dans le document EP-B1-0 013 970, mais uniquement pour le cas où l'encre à cuire est appliquée dans une zone partielle centrale du vitrage. Dans le cas d'un bombage par paire, les deux feuilles de verre baillent en effet quelque peu à cause des températures de leurs surfaces externes qui sont supérieures aux températures de leurs surfaces internes, ce qui permet aux gaz de réaction de s'échapper et empêche également les deux feuilles de verre d'adhérer l'une à l'autre. En revanche, si l'encre à cuire s'étend sur des zones superficielles plus étendues ou le long de la totalité du bord, ce procédé n'est plus applicable.

Il est bien sûr possible d'effectuer la cuisson de l'encre à cuire du type émail avant le bombage comme dans le procédé décrit dans le document DE-A1-39 20 573, lequel procédé a plus spécialement trait à un tunnel de refroidissement spécial pour le refroidissement contrôlé de vitrages au terme de la cuisson de la couche imprimée. Dans ce procédé, la cuisson de la couche d'émail précédant le bombage s'effectue dans un four à rouleaux installé en amont du tunnel de refroidissement, dans lequel les feuilles de verre planes sont chauffées à des températures de cuisson de 550 à 600°C. Cependant, un tel procédé n'empêche pas, malgré tout, l'adhésion des feuilles de verre l'une à l'autre dans de nombreux cas, beaucoup d'encres à cuire commerciales du genre émail actuellement utilisées adhérant en se ramollissant aux feuilles de verre et, éventuellement, aux autres éléments (tels que des matrices de transformation) venant à leur contact, aux températures de bombage.

Selon un autre procédé appartenant à l'état de la technique non publié (document DE 42 01 275), l'opération de cuisson s'effectue de la manière suivante : la feuille de verre individuelle portant la couche appliquée par impression est déposée, avec la couche d'encre à cuire du genre émail tournée vers le haut, sur l'autre feuille de verre individuelle et la paire de feuilles de verre est soumise, dans cette disposition, à un bombage préalable sur une forme de bombage annulaire, avec cuisson simultanée de la couche. Après le refroidissement des feuilles de verre prébombées, ces feuilles de verre sont permutées, de sorte que la couche d'encre cuite se trouve à l'intérieur, et la paire de feuilles de verre est, dans cette disposition, amenée par bombage à sa forme finale au cours d'un second processus de bombage. Cependant, là encore, des problèmes de collage entre les feuilles de verre peuvent se produire lors de l'utilisation de certaines encres traditionnelles, pour les raisons invoquées au paragraphe précédent.

Bien qu'il soit courant également, dans les deux procédés précédemment mentionnés, de couvrir la couche d'encre cuite, avant le processus de bombage, d'un agent de séparation résistant à la chaleur, par exemple, du talc ou du sulfate de sodium, il n'est malgré tout pas toujours possible d'éviter que, lors du bombage par paire avec la couche d'encre située à l'intérieur, les deux feuilles de verre individuelles n'adhèrent l'une à l'autre par endroits. Cette adhérence a, en règle générale, pour conséquence que la paire de feuilles de verre en question doit être mise au rebut.

L'invention a pour but de procurer un procédé de fabrication d'un vitrage feuilleté bombé pourvu d'une couche décorative en forme d'encadrement en une encre à cuire telle qu'un émail, cette couche décorative étant située à l'intérieur du vitrage feuilleté, dans lequel, tout en utilisant des encres à cuire traditionnelles, on évite de manière sûre une adhérence des feuilles de verre pendant l'opération de bombage desdites feuilles de verre et on augmente ainsi le rendement du processus de bombage.

Suivant l'invention, ce but est réalisé par le fait qu'après l'application par impression de la couche décorative sur l'une des feuilles de verre individuelles et après un processus de séchage qui suit, on applique par impression sur la couche décorative, le long de celle-ci, une encre à cuire contenant de l'argent métallique, telle qu'un émail, qui, au moment de l'opération de bombage, empêche tout contact de la couche décorative avec une autre feuille de verre et, de ce fait, empêche l'adhésion se faisant habituellement par l'intermédiaire de ladite couche, de cette dernière feuille avec la feuille de verre sur laquelle se trouve la couche décorative.
La présente invention concerne ainsi un procédé pour la fabrication d'un vitrage en verre feuilleté bombé, en particulier d'un vitrage automobile, formé d'au moins deux feuilles de verre individuelles et d'au moins une feuille intermédiaire thermoplastique reliant ces feuilles de verre l'une à l'autre, dans lequel une couche décorative en une encre à cuire est appliquée par impression sur l'une des feuilles de verre individuelles, sur la surface destinée ultérieurement à être en contact avec une feuille intermédiaire et dans la zone marginale, la couche décorative appliquée, après un processus de séchage ou de durcissement préalable, est cuite à une température supérieure à celle du séchage ou du durcissement, les feuilles de verre individuelles sont superposées l'une à l'autre avec la couche décorative cuite vers l'intérieur, les feuilles de verre ainsi agencées sont amenées d'un bloc par bombage à la forme souhaitée et les feuilles de verre individuelles bombées sont unies l'une à l'autre à chaud et sous pression après insertion de la ou des feuilles intermédiaires thermoplastiques, caractérisé en ce qu'après l'application par impression de la couche décorative et après le processus de séchage ou de durcissement qui suit, on applique par impression sur la couche décorative, le long de celle-ci, une encre à cuire contenant de l'argent métallique qui, au moment de l'opération de bombage, empêche tout contact de la couche décorative avec une autre feuille de verre.

Bien qu'il soit connu d'appliquer par impression sur une couche décorative faite d'une encre à cuire noire ou grise, un conducteur électrique fait d'une encre à cuire contenant de l'argent métallique et de cuire les deux couches ensemble, on ne s'attendait pas à ce que cette mesure soit également à même, lors du bombage de feuilles de verre comportant une couche décorative située à l'intérieur, d'empêcher toute adhérence mutuelle des feuilles de verre, lorsque, conformément à l'invention, on a appliqué une telle couche contenant de l'argent conducteur le long de la couche décorative. Dans ce cas, il n'est pas nécessaire que la couche décorative soit recouverte en surimpression sur la totalité de sa surface, sans interruptions, au moyen de la couche contenant de l'argent conducteur. Au contraire, il est parfaitement suffisant et même conseillé, pour des raisons de coût, de n'imprimer sur la couche décorative qu'une bande étroite de, par exemple, 2 à 5 mm de largeur, et ce sur la quasi-totalité de la longueur de l'encadrement décoratif et, éventuellement, sur toute sa longueur. La bande imprimée contenant l'argent conducteur peut en effet présenter des interruptions plus ou moins grandes sans que le succès du procédé conforme à l'invention soit de ce fait remis en question. Notamment l'encre à cuire contenant l'argent métallique peut être imprimée sur la couche décorative sous la forme de segments de bande non continus, répartis de façon plus ou moins uniforme tout le long de la couche décorative, ou la bande contenant l'argent conducteur peut être interrompue en un ou plusieurs endroits du vitrage, cette bande ou ces segments couvrant cependant au moins la quasi-totalité de la longueur de l'encadrement décoratif, si ce n'est toute sa longueur. Il est également possible d'imprimer sur la couche décorative non pas une bande continue ou des segments de l'encre à cuire contenant l'argent conducteur, mais d'autres figures discontinues rapprochées, géométriques ou non, de cette encre contenant l'argent conducteur, telles que des points consécutifs, ces figures couvrant cependant la quasi-totalité de la longueur de l'encadrement décoratif.

L'encre à cuire contenant l'argent métallique est, de préférence, appliquée sur la couche décorative à une courte distance du bord du verre et parallèlement à celui-ci. De préférence également, l'encre à cuire utilisée pour former une couche empêchant l'adhésion des feuilles, au-dessus de la couche décorative, contient de l'argent métallique à raison de 60 à 90 % en poids et, de préférence, de 70 à 80 % en poids.

L'avantage particulier du procédé conforme à l'invention réside dans le fait qu'il est possible d'utiliser les encres à cuire traditionnelles et éprouvées depuis longtemps pour les couches décoratives et pour les couches conductrices de l'électricité. De cette façon, on atteint une fiabilité élevée, car des paramètres courants de procédés de fabrication de vitrages feuilletés bombés pourvus d'une couche décorative peuvent être utilisés.

Pour la couche décorative qui est appliquée, par exemple, par sérigraphie, une encre à cuire durcissant aux U.V. avec des températures de cuisson de 550 à 650°C s'est notamment avérée satisfaisante, cette encre contenant, en parties en poids, comme constituants principaux, environ 3,3 parties d'une fritte de verre, 1 partie de corps colorant et 0,8 partie d'huile sérigraphique. La fritte de verre est un verre au borosilicate de plomb, et les corps colorants sont principalement du cuivre-chrome-spinelle.

Pour l'encre à cuire à argent conducteur, des pâtes sérigraphiques durcissant à chaud avec des températures de cuisson également de 550 à 650°C ont donné satisfaction. Ces encres à cuire comprennent, à titre de constituants principaux, une fritte de verre également en un verre au borosilicate de plomb, de l'huile sérigraphique et une fraction de 60 à 90 % en poids d'argent métallique.

Le procédé selon l'invention est particulièrement intéressant lorsqu'une impression d'une encre à cuire contenant de l'argent métallique est déjà prévue sur un endroit de la couche décorative pour former, par exemple, un réseau de conducteurs électriques. La bande d'encre à cuire contenant de l'argent métallique permettant d'empêcher le collage des feuilles de verre est alors imprimée en même temps que l'encre à cuire devant former le réseau de conducteurs électriques, sur la longueur restante de la couche décorative, comme dans l'exemple ci-après, et l'ensemble de l'encre à cuire contenant de l'argent métallique empêche le contact de la couche décorative avec une feuille de verre autre que celle sur laquelle la couche est déposée, selon le principe de l'invention.

Un exemple de réalisation de l'invention sera décrit ci-après plus en détail avec référence aux dessins annexés dans lesquels :

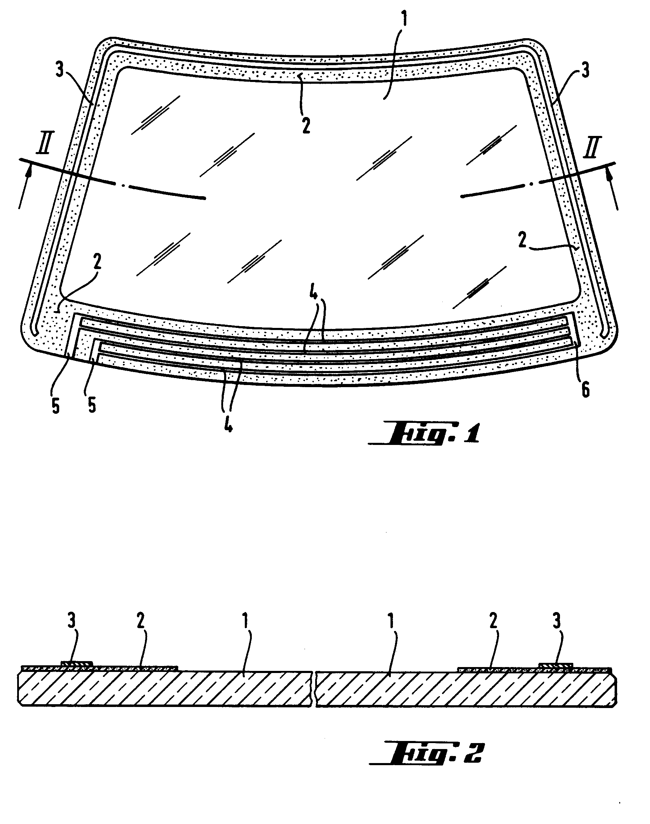

- la figure 1 illustre une feuille de verre individuelle imprimée conformément à l'invention et destinée à un pare-brise en verre feuilleté présentant une zone chauffante à son bord inférieur,
- la figure 2 est une vue, en coupe, à plus grande échelle suivant la ligne II-II de la figure 1.

Dans le cas de la feuille de verre 1, il s'agit de la feuille de verre individuelle qui ultérieurement formera, dans le vitrage en verre feuilleté terminé, la feuille de verre extérieure, c'est-à-dire la feuille de verre tournée vers l'extérieur. Sur cette feuille de verre extérieure 1, sont appliquées par impression et cuites, sur le côté tourné vers l'intérieur, c'est-à-dire vers la feuille intermédiaire thermoplastique, les diverses couches telles que la couche décorative en forme d'encadrement 2, la bande d'argent conducteur étroite 3, ainsi que le conducteur chauffant 4, les bandes collectrices 5 et le conducteur de liaison 6 qui sont également en émail à l'argent conducteur.

L'encadrement décoratif 2 sera appliqué par impression d'une manière connue sur la feuille de verre plane 1 par sérigraphie au cours d'une première opération d'impression. A titre d'encre à cuire on utilisera, par exemple, une encre sérigraphique grise durcissant aux U.V. à température de cuisson de 580 à 620°C. Immédiatement après l'opération d'impression, la couche décorative 2 est durcie par irradiation à la lumière U.V., de sorte qu'elle peut être soumise à une seconde opération d'impression. Au cours de cette seconde opération d'impression, également par sérigraphie, sont imprimés dans la zone marginale inférieure de la feuille de verre 1, des conducteurs chauffants 4, des bandes collectrices 5 et un conducteur de liaison 6 en une encre à cuire traditionnelle à l'argent conducteur. Cette zone chauffante se trouve dans la zone de repos des essuie-glaces et sert, en cas de besoin, à libérer les essuie-glaces gelés et/ou à faire fondre les amas de neige dans ce domaine.

Pendant la même étape du procédé que celle au cours de laquelle la zone chauffante formée des conducteurs 4, 5 et 6 a été imprimée, une bande continue étroite 3 de cette même encre à cuire traditionnelle à l'argent conducteur est imprimée le long de la périphérie de la feuille de verre, sur la couche décorative 2, à une courte distance du bord de verre. La bande 3 a, par exemple, une largeur de 3 à 4 mm et sa distance du bord du verre est, par exemple, de 2 à 5 mm. La bande 3 a également, comme les conducteurs 4, 5 et 6, une épaisseur d'environ 20 µm.

Après l'impression de l'encre à cuire à l'argent conducteur, ladite encre est durcie par des rayons infrarouges au point que les feuilles de verre imprimées puissent être manipulées sans que les couches imprimées soient abîmées. Les feuilles de verre imprimées dont la face imprimée est tournée vers le haut sont alors soumises à un processus de traitement thermique à environ 600°C, au cours duquel l'huile sérigraphique servant de liquide véhiculaire lors de l'impression se vaporise et la fritte de verre de l'encre à cuire de l'encadrement décoratif fond et forme une couche d'émail imperforée. Lors de cette opération de cuisson, la bande 3 ainsi que les conducteurs 4, 5 et 6 cuisent également et subsistent ultérieurement en tant que bandes en relief sur la couche décorative 2.

Après l'opération de cuisson, la feuille de verre 1 est superposée à la seconde feuille de verre individuelle et ce de telle façon que le côté imprimé de la feuille de verre 1 soit adjacent à la seconde feuille de verre individuelle. Dans cet agencement, la paire de feuilles de verre est soumise à l'opération de bombage, c'est-à-dire qu'elle est chauffée à une température d'au moins 620°C, puis elle est bombée d'un bloc selon un procédé de bombage connu.

Après le bombage et le refroidissement à température ambiante, les deux feuilles de verre bombées sont séparées l'une de l'autre. Elles sont ensuite à nouveau superposées l'une à l'autre avec intercalation d'une pellicule d'un polymère thermoplastique comme du polyvinylbutyral (PVB) et sont unies l'une à l'autre de la manière habituelle, à chaud et sous pression, pour former le vitrage en verre feuilleté.

## Revendications

1. Procédé pour la fabrication d'un vitrage en verre feuilleté bombé, en particulier d'un vitrage automobile, formé d'au moins deux feuilles de verre individuelles et d'au moins une feuille intermédiaire thermoplastique reliant ces feuilles de verre l'une à l'autre, dans lequel une couche décorative en une encre à cuire est appliquée par impression sur l'une des feuilles de verre individuelles, sur la surface destinée ultérieurement à être en contact avec une feuille intermédiaire et dans la zone marginale, la couche décorative appliquée, après un processus de séchage ou de durcissement préalable, est cuite à une température supérieure à celle du séchage ou du durcissement, les feuilles de verre individuelles sont superposées l'une à l'autre avec la couche décorative cuite vers l'intérieur, les feuilles de verre ainsi agencées sont amenées d'un bloc par bombage à la forme souhaitée et les feuilles de verre individuelles bombées sont unies l'une à l'autre à chaud et sous pression après insertion de la ou des feuilles intermédiaires thermoplastiques, caractérisé en ce qu'après l'application par impression de la couche décorative et après le processus de séchage ou de durcissement qui suit, on applique par impression sur la couche décorative, le long de celle-ci, une encre à cuire contenant de l'argent métallique qui, au moment de l'opération de bombage, empêche tout contact de la couche décorative avec une autre feuille de verre.

2. Procédé selon la revendication 1, caractérisé en ce qu'on applique l'encre à cuire contenant l'argent métallique, par impression sur la couche décorative, sur au moins la quasi-totalité de la longueur de celle-ci.

3. Procédé selon la revendication 2, caractérisé en ce qu'on applique l'encre à cuire contenant l'argent métallique, par impression sur la couche décorative, sous la forme d'une bande étroite de 2 à 5 mm de largeur.

4. Procédé selon l'une quelconque des revendications 2 ou 3, caractérisé en ce qu'on applique l'encre à cuire contenant l'argent métallique, par impression sur la couche décorative, sous la forme d'une bande interrompue ou de segments de bande non continus.

5. Procédé selon la revendication 2, caractérisé en ce qu'on applique l'encre à cuire contenant l'argent métallique, par impression sur la couche décorative, sous la forme de figures discontinues, rapprochées, géométriques ou non.

6. Procédé selon l'une des revendications 2 à 5, caractérisé en ce qu'on applique l'encre à cuire contenant l'argent métallique sur la couche décorative, parallèlement au bord du verre.

7. Procédé selon l'une quelconque des revendications 2 à 6, caractérisé en ce qu'on applique l'encre à cuire contenant l'argent métallique sur la couche décorative à une courte distance du bord du verre.

8. Procédé selon l'une quelconque des revendications 1 à 7, caractérisé en ce qu'on utilise une encre à cuire contenant de l'argent métallique à raison de 60 à 90 % en poids et, de préférence, de 70 à 80 % en poids.

## Claims

1. Process for the production of a glazing of bent laminated glass, particularly a car glazing, formed from at least two individual glass sheets and at least one intermediate, thermoplastic sheet linking said glass sheets to one another, in which a decorative coating of a baking ink is applied by printing to one of the individual glass sheets on the surface which is subsequently to be in contact with an intermediate sheet and in the marginal area, in which, following a prior drying or hardening process, the applied decorative coating is baked at a temperature higher than that of the drying or hardening temperature, the individual glass sheets being superimposed with the baked, decorative coating towards the inside, the thus arranged glass sheets being brought from a block by bending to the desired shape and the bent, individual glass sheets are joined to one another hot and under pressure following the insertion of the intermediate, thermoplastic sheet or sheets, characterized in that following the application by printing of the decorative coating and following the subsequent drying or hardening process, to and along the decorative coating is applied by printing a baking ink containing metallic silver which, at the time of the bending operation, prevents any contact between the decorative coating and another glass sheet.

2. Process according to claim 1, characterized in that the baking ink containing the metallic silver is applied by printing to the decorative coating over at least virtually the entire length thereof.

3. Process according to claim 2, characterized in that the baking ink containing the metallic silver is applied by printing to the decorative coating in the form of a narrow strip 2 to 5 mm wide.

4. Process according to either of the claims 2 and 3, characterized in that the baking ink containing the metallic silver is applied by printing to the decorative coating in the form of a discontinuous strip or discontinuous strip segments.

5. Process according to claim 2, characterized in that the baking ink containing the metallic silver is applied by printing to the decorative coating in the form of geometrical or non-geometrical, brought together, discontinuous figures..

6. Process according to one of the claims 2 to 5, characterized in that the baking ink containing the metallic silver is applied to the decorative coating parallel to the edge of the glass.

7. Process according to any one of the claims 2 to 6, characterized in that the baking ink containing the metallic silver is applied to the decorative coating at a short distance from the edge of the glass.

8. Process according to any one of the claims 1 to 7, characterized in that use is made of a baking ink containing metallic silver in a proportion of 60 to 90 wt.% and preferably 70 to 80 wt.%.

## Patentansprüche

1. Verfahren zur Herstellung einer gebogenen Verbundglasscheibe, insbesondere Autoglasscheibe, aus mindestens zwei Einzelglasscheiben und mindestens einer diese miteinander verbindenden thermoplastischen Zwischenfolie, bei dem eine Dekorschicht aus einer Einbrennfarbe auf eine der beiden Einzelglasscheiben auf der später an der Zwischenschicht anliegenden Oberfläche im Randbereich aufgedruckt, die aufgedruckte Dekorschicht nach einem voraufgehenden Trocknungs- oder Härtungsprozeß bei erhöhter Temperatur eingebrannt, die beiden Einzelglasscheiben mit der eingebrannten Dekorschicht nach innen zusammengelegt, das Glasscheibenpaar in dieser Anordnung gemeinsam in die gewünschte Form gebogen, und die gebogenen Einzelglasscheiben nach Einfügen der thermoplastischen Zwischenschicht durch Anwendung von Wärme und Druck miteinander verbunden werden,
**dadurch gekennzeichnet,** daß nach dem Aufdrucken der Dekorschicht und dem nachfolgenden Trocknungs- oder Härtungsprozeß auf die Dekorschicht entlang derselben eine metallisches Silber enthaltende Einbrennfarbe aufgedruckt wird, die beim Biegevorgang jeden Kontakt der Dekorschicht mit einer anderen Glasscheibe verhindert.

2. Verfahren nach Anspruch 1, **dadurch gekennzeichnet,** daß die das metallische Silber enthaltende Einbrennfarbe auf die Dekorschicht wenigstens annähernd über deren volle Länge aufgedruckt wird.

3. Verfahren nach Anspruch 2, **dadurch gekennzeichnet,** daß die das metallische Silber enthaltende Einbrennfarbe in Form eines schmalen Streifens von 2 bis 5 mm Breite auf die Dekorschicht aufgedruckt wird.

4. Verfahren nach einem der Ansprüche 2 oder 3, **dadurch gekennzeichnet,** daß die das metallische Silber enthaltende Einbrennfarbe in Form eines unterbrochenen Streifens oder von nicht zusammenhängenden Streifenabschnitten auf die Dekorschicht aufgedruckt wird.

5. Verfahren nach Anspruch 2, **dadurch gekennzeichnet,** daß die das metallische Silber enthaltende Einbrennfarbe in Form von nichtzusammenhängenden, aufeinanderfolgenden, geometrischen oder nichtgeometrischen Figuren aufgedruckt wird.

6. Verfahren nach einem der Ansprüche 2 bis 5, **dadurch gekennzeichnet,** daß die das metallische Silber enthaltende Einbrennfarbe parallel zur Scheibenkante auf die Dekorschicht aufgebracht wird.

7. Verfahren nach einem der Ansprüche 2 bis 6, **dadurch gekennzeichnet,** daß die das metallische Silber enthaltende Einbrennfarbe mit geringem Abstand von der Scheibenkante auf die Dekorschicht aufgebracht wird.

8. Verfahren nach einem der Ansprüche 1 bis 7, **dadurch gekennzeichnet,** daß eine Einbrennfarbe mit einem Anteil metallischen Silbers von 60 bis 90 Gew.-%, und vorzugsweise von 70 bis 80 Gew.-%, verwendet wird.
